# FASCICULE DE BREVET EUROPEEN

(11) **EP 1 114 351 B1**
(45) Date de publication et mention de la délivrance du brevet: **13.03.2002**
(21) Numéro de dépôt: 99941721.5
(22) Date de dépôt: 08.09.1999
(51) Int. Cl.: G02C 5/04, G02C 13/00, G02C 1/06

(54) **PROCEDE DE MONTAGE RAPIDE DE LUNETTES DE VUE**
VERFAHREN ZUM SCHNELLMONTIEREN VON SEHHILFEN
METHOD FOR RAPIDLY MOUNTING EYEPIECES IN A SPECTACLE FRAME

(30) Priorité: 17.09.1998 FR 9811768
(43) Date de publication de la demande: 11.07.2001
(73) Titulaire: Optique Chavin Rethore, 34200 Sète (FR); Rethore, Gérard, 34200 Sète (FR); Rethore, Magali, 34200 Sète (FR)
(72) Inventeur: RETHORE, Gérard, F-34200 Sète (FR); RETHORE, Magali, F-34200 Sète (FR)
(74) Mandataire: Perrier, Jean-Pierre
(86) Numéro de dépôt international: FR9902138
(87) Numéro de publication internationale: WO0017697

(56) Documents cités:
- WO-A-95/14955
- FR-A- 2 469 906
- FR-A- 2 556 850
- FR-A- 2 703 162
- US-A- 4 997 267
- US-A- 5 694 194

## Description

La présente invention concerne un procédé de montage rapide de lunettes de vue.
La présente invention concerne plus particulièrement le montage de lunettes appelées demi-lunes. Ces lunettes sont souvent utilisées comme équipement complémentaire. Elles sont utilisées notamment par les personnes qui se déplacent beaucoup et qui souhaitent toujours avoir des lunettes sous la main. Ces personnes perdent de temps en temps leur demi-lune et recherchent donc un produit bon marché. Il y a aussi certaines personnes qui adoptent des demi-lunes bon marché par souci d'économie.

Les lunettes bon marché proposées sur le marché sont réalisées à partir d'une monture et de verres prémontés dans cette monture. Il existe des puissances différentes pour les verres, mais les deux verres d'une paire de lunettes ont la même puissance. Ainsi, si la correction nécessaire pour un oeil est différente de celle pour l'autre oeil, ce qui est tout de même souvent le cas, il faut choisir une paire de lunettes avec des verres d'une puissance moyenne, adaptée en fait ni à un oeil, ni à l'autre.

De plus, d'un point de vue morphologie, les yeux d'une personne sont distants l'un de l'autre d'une distance variable allant généralement d'environ 53 mm à 70 mm. Lorsqu'un opticien réalise une paire de lunettes, il mesure la distance séparant les deux yeux pour adapter le centre des verres à la morphologie de son client. Les lunettes prémontées ne permettent pas un tel ajustement. L'écartement des verres correspond à une distance moyenne des yeux.

Les lunettes prémontées ne présentent donc pas, dans la majorité des cas, une puissance adaptée à la vue du client, ni un centrage adapté. Ceci peut être la cause de céphalées pour le porteur de ces lunettes si celles-ci sont portées trop longtemps ou trop souvent.

Le document US-A-5 694 194 décrit un montage de lunettes à partir d'éléments standards, dont la monture comprend, d'une part, deux cercles définissant des logements pour verres identiques et présentant chacun un centre, et d'autre part, un pont de liaison choisi parmi des ponts de largeurs différentes, de manière que l'écart entre les centres des logements corresponde à l'écart pupillaire du porteur. Cet agencement nécessite des opérations de montage de la monture que l'invention veut supprimer et ne permet pas de corriger l'asymétrie pupillaire.

Le document US-A-5 648 832 décrit une lunette de soleil dont la monture est équipée de verres non corectifs, donc sans centre. Pour compenser les désagréments visuels générés par le galbe des verres, les centres des courbures sphériques des faces respectivement, antérieure et postérieure de chaque verre, sont décalés longitudinalement pour procurer un effet prismatique améliorant le confort du porteur, mais n'apportant aucune correction.

La présente invention a pour but de fournir un procédé permettant de réaliser des lunettes bon marché qui soient adaptées à la vue de la personne à laquelle elles sont destinées.

Ce procédé fait partie de ceux consistant, à partir de la connaissance de l'écart pupillaire et de la correction nécessaire pour chaque oeil du porteur :
- à choisir une monture dont l'écart de ses logements est proche de l'écart pupillaire du porteur, ce choix étant effectué parmi une série de montures se différenciant par la valeur de l'écart de leurs logements de centre (C),
- à choisir les verres parmi un ensemble de verres optiques ayant la forme des logements des montures, réalisés dans des lentilles ayant des puissances correctives différentes et ayant un centre (O) coïncidant avec celui (I) du verre,
- et à mettre en place les verres dans les logements de la monture retenue.

Selon l'invention, pour chaque modèle de monture, la monture est choisie parmi au moins deux montures dont la valeur de l'écart entre les deux logements pour verre est respectivement de 60mm et 65 mm et dont chacun des logements est symétrique par rapport à son centre géométrique (C), tandis que l'éventuelle différence entre l'écart des logements de la monture et l'écart pupillaire du porteur, est compensée en remplacant au moins l'un des verres centrés, de centre (O) et (I) confondus, de l'ensemble, par un verre décentré, de même puissance corrective mais dont les centres (O) et (I) sont espacés d'une valeur constante sur les verres de diverses puissances de l'ensemble, le centre (I) de ce verre décentré étant disposé par rotation de 180° autour du centre (C) pour un verre ménisque ou par rotation de 180° autour de l'axe vertical du logement pour un verre biconvexe, soit à droite soit à gauche du centre (C) du logement qui le reçoit, pour rapprocher le centre (O) de la lentille du centre de la pupille.

En utilisant ce procédé, un opticien peut, avec un stock réduit de verres prétaillés à la forme des logements des montures, réaliser une paire de lunettes adaptée à la vue d'un client, tant d'un point de vue puissances que d'un point de vue écart. En fonction de la vue du client, il lui suffit en effet de choisir les verres appropriés, d'un point de vue puissance et de décentrage, et de les monter dans la monture de taille adaptée. Les lunettes peuvent être réalisées sur le champ et sont parfaitement adaptées à la vue et à la morphologie du client.

De toute façon, l'invention sera bien comprise à l'aide de la description qui suit, en référence au dessin schématique annexé, représentant à titre d'exemple non limitatif des verres de lunettes et une monture pour illustrer le procédé selon l'invention.
Figures 1 et 2 montrent un verre ménisque respectivement en vue de face et en vue de côté,
Figures 3 et 4 montrent un verre biconvexe respectivement en vue de face et en vue de côté,
Figures 5 et 6 montrent en perspective respectivement un verre ménisque et un verre biconvexe, et
Figure 7 montre en vue de face une paire de lunettes réalisée selon le procédé de montage selon l'invention.

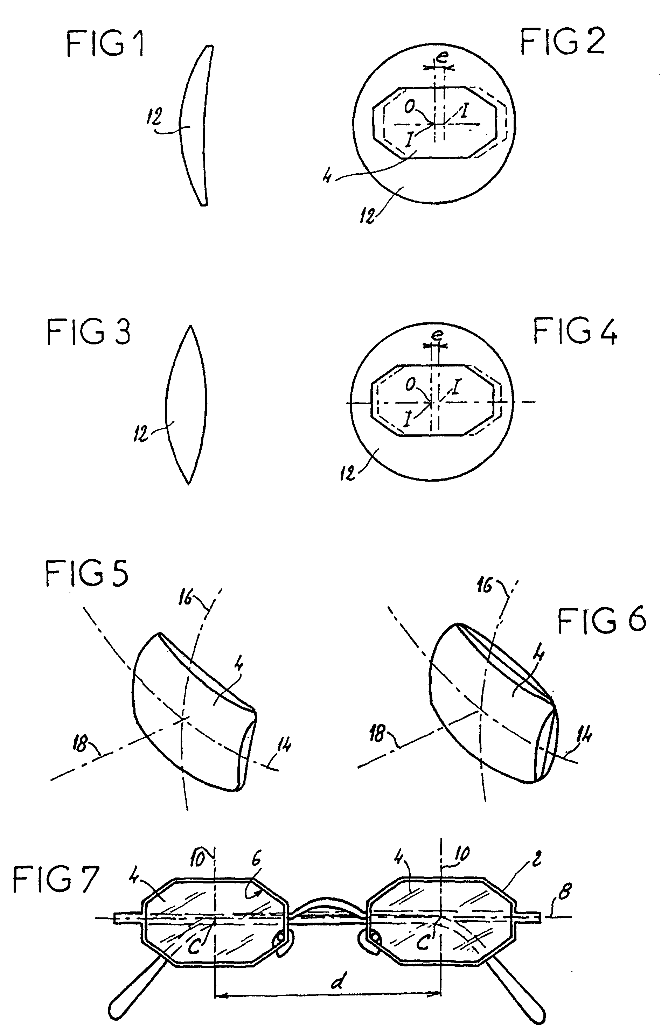

La figure 7 montre une paire de lunettes constituée d'une monture 2 et de deux verres 4. Chaque verre 4 est monté dans un logement 6 prévu à cet effet dans la monture 2.

Les logements 6 sont sensiblement coplanaires. Ils présentent tous deux une forme identique, ici une forme d'octogone. Ces octogones présentent un centre C. Un axe 8, appelé axe horizontal, relie les deux centres C. Un axe 10, appelé axe vertical, passe par le centre C de chaque logement 6, est perpendiculaire à l'axe horizontal 8 et est dans le plan de ce logement 6. Les axes 8 et 10 sont dénommés axes horizontal et vertical car lorsqu'un utilisateur porte la paire de lunettes représentée sur la figure 7, l'axe 8 est en position sensiblement horizontale tandis que les axes 10 sont sensiblement verticaux.

Une distance d sépare les deux centres C. Ici, la distance d prend, à titre d'exemple, soit la valeur 60mm, soit la valeur 65 mm. Dans les deux cas, la forme et la taille des logements 6 restent identiques.

Les logements 6 sont tels qu'ils sont symétriques à la fois par rapport à l'axe horizontal 8 et par rapport à l'axe vertical 10. Ils sont donc symétriques par rapport à leur centre C.

Les verres 4 sont taillés dans des lentilles 12 circulaires de centre O. Ces lentilles sont soit des lentilles ménisques (figures 1 et 2), soit des lentilles biconvexes (figures 3 et 4). On peut également envisager le cas non représenté de lentilles biconcaves.

Les verres reprennent la forme octogonale des logements 6. Chaque verre 4 présente un centre I. Le verre 4 est taillé soit de telle sorte que les centres O et I respectivement des lentille et verre coïncident, soit de telle sorte qu'un écart e existe entre ces deux centres. On a donc des verres centrés (O et I coïncident trait plein sur les figures 2 et 4) et des verres décentrés (O et I ne coïncident pas traits pointillés sur les figures 2 et 4). Lorsque le verre 4 est décentré, il l'est de telle sorte que l'écart e soit égal à 2 mm.

Les verres 4 sont disponibles en diverses puissances, par exemple de 0,5 à 5 dioptries avec un incrément de 0,5 dioptrie. On a alors dix puissances distinctes. Les verres 4 pouvant être centrés ou décentrés, il y a vingt sortes de verres disponibles.

Chaque verre présente lui aussi un axe horizontal 14 et un axe vertical 16. Ces deux axes sont dans le plan du verre et passent par le centre I du verre 4. Un troisième axe 18, perpendiculaire aux axes 14 et 16 passe lui aussi par le centre I.

Le montage de la paire de lunettes est réalisé par exemple par un opticien. Celui-ci dispose de montures de lunettes 2 avec deux écarts d distincts. Ces montures 2 peuvent être déclinées en plusieurs teintes et éventuellement plusieurs matériaux. Il dispose également de verres 4 centrés ou décentrés, de différentes puissances.

Avant de réaliser le montage des lunettes, l'opticien contrôle la vue du client ou mesure la puissance de ses précédentes lunettes. Il mesure ensuite l'écart entre les deux yeux du client. Il obtient ainsi la puissance nécessaire des verres droit et gauche ainsi que l'écart nécessaire entre les centres optiques des verres.

Si l'opticien choisit par exemple une monture 2 avec un écart d de 60 mm et deux verres 4 centrés, l'écart de centrage obtenu est de 60 mm.

Si l'opticien choisit, avec la même monture, un verre 4 centré et un verre 4 décentré, l'écart de centrage est soit de 58mm (d-e=60-2), soit de 62 mm (d+e=60+2).

Lorsqu'un verre 4 décentré est disposé dans un logement 6 de la monture 2, son centre I coïncide avec un centre C mais le centre O se trouve par exemple entre les deux centres C. Pour déplacer le centre O et le faire passer à l'extérieur des deux centres C, il suffit de faire pivoter le verre 4 de 180° autour de son axe 18, perpendiculaire au plan du verre 4.

Dans le cas d'un verre biconvexe (figure 6), il est également possible de faire changer le centre O de place en tournant le verre 4 de 180° autour de l'axe vertical 16. Dans ce cas, si on choisit de n'utiliser que des verres biconvexes, on peut utiliser des montures dont les logements 6 sont symétriques uniquement par rapport à l'axe vertical 10. Ceci permet d'avoir une plus grande variété de formes de montures. Toutefois, l'utilisation de verres ménisques est plus confortable pour la personne qui porte les lunettes.

Avec deux verres décentrés, il est possible d'obtenir un écart de centrage de 56 mm -les deux centres O sont à l'intérieur des deux centres C- ou bien de 64 mm -les deux centres O sont à l'extérieur des centres C-. On ne tient pas compte, ici du cas où on peut obtenir un écart de centrage de 60 mm -un centre O à l'intérieur et un centre O à l'extérieur des centres C-.

Une monture 2 avec un écart d de 60 mm permet donc d'obtenir des écarts de centrage de 56, 58, 60, 62 et 64 mm.

De même, avec une monture 2 présentant un écart d de 65mm, on obtient des écarts de centrage de 61, 63, 65, 67 et 69 mm.

Les écarts possibles sont donc de 56, 58, 60, 61, 62, 63, 64, 65, 67, et 69 mm. Les écarts de centrage de 60 à 65mm sont donc couverts millimètre par millimètre tandis que sur la plage de 55 à 70mm, l'erreur de centrage est d'au plus 1 mm.

Les normes en vigueur, mises en place par la Sécurité Sociale en France, accordent comme tolérance dans le centrage d'un verre correcteur un décentrement de 1/4° prismatique. Cette tolérance pour un verre de lunette permet pour une lunette complète une tolérance de 1/2° prismatique. Compte tenu de cette faible valeur, on peut estimer cette déviation tolérée à 1/2 dioptrie prismatique (1 degré = 0,9 dioptrie prismatique).

La déviation D, exprimée en dioptrie prismatique est égale au produit de la puissance du verre exprimée en dioptrie par le décentrement exprimé en cm. Ainsi, pour un décentrement de 0,5cm sur un verre de 6 dioptries, le décentrement est de 3 dioptries prismatiques.

Dans l'exemple donné ci-dessus, on a vu que le décentrement est au plus de 1 mm, soit 0,1 cm pour un écart de 55 à 70mm. La tolérance de décentrement est de 0,5 dioptrie prismatique. Ce décentrement est donc acceptable jusqu'à une puissance de verre de 5 dioptries.

Pour un écart de 54 ou 71 mm, le décentrement sera de 2mm. Ce décentrement sera donc admissible jusqu'à une puissance de verres de 2,5 dioptries.

Le procédé décrit ci-dessus, avec un nombre limité de composants, permet à un opticien de pouvoir facilement et rapidement réaliser une paire de lunettes adaptée à l'utilisateur. Grâce à la forme identique des verres, ces derniers peuvent être prétaillés. Le stock de verres à gérer est limité. L'opticien peut donc rapidement, et à moindre frais, réaliser une paire de lunettes sur mesure.

Comme il va de soi, l'invention ne se limite pas à la forme de réalisation du procédé selon l'invention décrite cidessus à titre d'exemple non limitatif ; elle en embrasse au contraire toutes les variantes dans le cadre des revendications ci-après.

Ainsi, par exemple, les verres pourraient présenter une autre forme géométrique symétrique. La forme qui convient dans tous les cas est une forme circulaire. Mais d'autres formes, par exemple polygonales ou elliptiques, non représentées au dessin peuvent convenir.

Les écarts et distances données sont données à titre d'exemple. Il est bien entendu possible de choisir d'autres valeurs pour l'écart au niveau de la monture et le décentrage des verres. Il est aussi possible d'avoir par exemple trois types de montures avec des écarts différents entre les logements.

## Revendications

1. Procédé de montage de lunettes de vue avec des verres optiques (4) à la forme des logements (6) d'une monture comprenant deux logements identiques présentant chacun un centre géométrique (C), ces centres étant séparés par un écart (d), procédé consistant, à partir de la connaissance de l'écart pupillaire et de la correction nécessaire pour chaque oeil du porteur :
- à choisir une monture (2) dont l'écart de ses logements (6) est proche de l'écart pupillaire du porteur, ce choix étant effectué parmi une série de montures (2) se différenciant par la valeur de l'écart et de leurs logements,
- à choisir les verres (4) parmi un ensemble de verres optiques ayant la forme des logements (6) des montures, réalisés dans des lentilles ayant des puissances correctives différentes et ayant un centre (O) coïncidant avec celui (I) du verre,
- et à mettre en place les verres (4) dans les logements (6) de la monture retenue,
**caractérisé en ce que,** pour chaque modèle de monture, la monture (2) est choisie parmi au moins deux montures dont la valeur de l'écart (d) entre les deux logements (6) pour verre est respectivement de 60 mm et 65 mm et dont chacun des logements (6) est symétrique par rapport à son centre géométrique (C), tandis que, l'éventuelle différence entre l'écart (d) des logements de la monture et l'écart pupillaire du porteur, est compensée en remplaçant au moins l'un des verres centrés, des centres (O) et (I) confondus, de l'ensemble, par un verre décentré, de même puissance corrective mais dont les centres (O) et (I) sont espacés d'une valeur constante sur les verres de diverses puissances de l'ensemble, le centre (I) de ce verre décentré étant disposé par rotation de 180° autour du centre (C) pour un verre ménisque ou par rotation de 180° autour de l'axe vertical (10) du logement (6) pour un verre biconvexe, soit à droite, soit à gauche du centre (C) du logement qui le reçoit, pour rapprocher le centre (O) de la lentille du centre de la pupille.

2. Montage de lunettes de vue avec des verres optiques comprenant, d'une part, des montures (2) avec chacune deux logements (6) de forme identique et de centre (C), les centres (C) de ces logements étant séparés par un écart (d) qui est différent sur les montures d'une même série, et d'autre part, un ensemble des verres correctifs (4) de puissances diverses, chaque verre étant à la forme des logements (6) des montures et étant centré, c'est-à-dire ayant son centre (I) coïncidant avec le centre (O) de la lentille qu'il forme, **caractérisé en ce qu'il** comprend, pour chaque modèle de monture, au moins deux montures (2) dont la valeur de l'écart (d) entre deux logements (6) est respectivement de 60 et 65 mm et dont chacun des logements (6) est symétrique par rapport à son centre géométrique (C), tandis que, à chaque verre correctif centré est associé un verre correctif décentré procurant la même correction mais dont le centre (I) respectivement du verre et (O) de la lentille sont séparés par un écart (e), de valeur constante sur les différents verres, de manière que, lors de l'assemblage des composants des lunettes, la différence entre l'écart pupillaire du porteur et l'écart (d) des logements de la monture retenue puisse être compensée par montage d'un ou de deux verres décentrés dans les logements de la monture, chacun de ces verres pouvant, par rotation de 180° autour du centre (C) pour un verre ménisque ou par rotation de 180° autour de l'axe vertical (10) du logement (6) pour un verre biconvexe, avoir son centre (I) à gauche ou à droite du centre (C) du logement pour rapprocher le centre (O) de sa lentille du centre de la pupille correspondante.

3. Montage de lunettes selon la revendication 1, **caractérisé en ce que** la valeur de décentrage des verres décentrés (4) d'une même ensemble de verres est de 2 mm.

## Claims

1. A method of mounting spectacles having optical glasses (4), in the form of housings (6) of a frame comprising two identical housings each having a geometric centre (C), these centres being separated by a spacing (d), the method consisting, starting from a knowledge of the spacing between the pupils and the correction required for each eye of the wearer, in:
- selecting a frame (2) whereof the spacing between the housings (6) is close to the spacing between the pupils of the wearer, this selection being made from a series of frames (2) differing in the value of the spacing and their housings,
- selecting the glasses (4) from a set of optical glasses having the shape of the housings (6) of the frames, these optical glasses being made of lenses having different corrective powers and a centre (O) which coincides with that (I) of the optical glass,
- and positioning the optical glasses (4) in the housings (6) of the held frame, **characterised in that**, for each frame model, the frame (2) is selected from at least two frames whereof the value of the spacing (d) between the two obtical glass housings (6) is respectively 60 mm and 65 mm and whereof each of the housings (6) is symmetrical with respect to its geometric centre (C), while any difference between the spacing (d) between the housings of the frame and the spacing between the pupils of the wearer is compensated by replacing at least one of the centred optical glasses, the centres (O) and (I) of the set being coincident, with an off-centre optical glass which has the same corrective power but whereof the centres (O) and (I) are spaced by a constant value for the optical glasses of differing powers of the set, the centre (I) of this off-centre optical glass being disposed rotated through 180° about the centre (C) for a meniscal optical glass or rotated through 180° about the vertical axis (10) of the housing (6) for a double-convex optical glass, either to right or left of the centre (C) of the housing receiving it, in order to come closer to the centre (O) of the lens at the centre of the pupil.

2. Mounting of spectacles having optical glasses comprising on the one hand frames (2) each having two housings (6) which are identical in shape and in centre (C), the centres (C) of these housings being separated by a spacing (d) which is different in the frames of a single series, and on the other hand a set of corrective optical glasses (4) of differing powers, each optical glass being in the shape of the housings (6) of the frames and being centred, that is to say having its centre (I) coincident with the centre (O) of the lens it forms, **characterised in that** it comprises, for each frame model, at least two frames (2) whereof the value of the spacing (d) between two housings (6) is respectively 60 and 65 mm and whereof each of the housings (6) is symmetrical with respect to its geometric centre (C) while there is associated with each centred corrective optical glass an off-centre corrective optical glass which provides the same correction but whereof the centre (I) of the optical glass and the centre (O) of the lens respectively are separated by a spacing (e) of constant value with respect to the different optical glasses, in such a way that when the components of the spectacles are assembled, the difference between the spacing between the pupils of the wearer and the spacing (d) between the housings of the held frame may be compensated by mounting one or two off centre optical glasses in the housings of the frame, each of these optical glasses being able, on being rotated through 180° about the centre (C) for a meniscal optical glass or by being rotated through 180° about the vertical axis (10) of the housing (6) for a double-convex optical glass, to have its centre (I) to left or right of the centre (C) of the housing in order to come closer to the centre (O) of its lens at the centre of the corresponding pupil.

3. Mounting of spectacles according to Claim 1, **characterised in that** the value of the off-centring of the off-centre optical glasses (4) of a single set of optical glasses is 2 mm.

## Patentansprüche

1. Verfahren zur Montage von Sehbrillen mit optischen Gläsern (4) in Form von Aufnahmen (6) einer Fassung mit zwei identischen Aufnahmen, die jeweils eine geometrische Mitte (C) aufweisen, wobei diese Mitten durch einen Abstand (d) getrennt sind, wobei man bei diesem Verfahren bei Kenntnis des Pupillenabstande und der erforderlichen Korrektur für jedes Auge des Trägers:
- eine Fassung (2) auswählt, bei der der Abstand ihrer Aufnahmen (6) nahe dem Pupillenabstand des Trägers ist, wobei diese Wahl unter einer Reihe von Fassungen (2) getroffen wird, die sich durch den Wert des Abstands ihrer Aufnahmen unterscheiden,
- unter einer Anordnung optischer Gläser mit der Form der Aufnahmen (6) der Fassungen Gläser (4) auswählt, die aus Linsen mit unterschiedlichen Korrekturstärken und mit einer Mitte (O), die mit der (I) des Glases zusammenfällt, hergestellt sind,
- und die Gläser (4) in die Aufnahmen (6) der Haltefassung anordnet,
**dadurch gekennzeichnet, daß** für jedes Fassungsmodell die Fassung (2) unter mindestens zwei Fassungen ausgewählt wird, deren Wert des Abstands (d) zwischen den beiden Aufnahmen (6) pro Glas 60 mm bzw. 65 mm beträgt und bei denen jede der Aufnahmen (6) zu ihrer geometrischen Mitte (c) symmetrisch ist, während die mögliche Differenz zwischen dem Abstand (d) der Aufnahmen der Fassung und dem Pupillenabstand des Trägers dadurch kompensiert wird, daß mindestens das eine der zentrierten Gläser mit zusammenfallenden Mitten (O) und (I) der. Anordnung durch ein nicht zentriertes Glas mit der gleichen Korrekturstärke ersetzt wird, wobei aber deren Mitten (O) und (I) um einen konstanten Wert bei Gläsern mit verschiedenen Stärken der Anordnung beabstandet sind, wobei die Mitte (I) dieses nicht zentrierten Glaaes bei einem Meniskenglas durch Drehung um 180° um die Mitte (C) und bei einem bikonvexen Glas durch Drehung um 180° um die vertikale Achse (10) der Aufnahme (6) entweder nach rechts oder nach links von der Mitte (C) der sie aufnehmenden Aufnahme verschoben ist, um die Mitte (O) der Linse der Pupillenmitte anzunähern.

2. Montage von Sehbrillen mit optischen Gläsern, die einerseits Fassungen (2) mit jeweils zwei Aufnahmen (6) identischer Form und mit der Mitte (C), wobei diese Mitten (C) dieser Aufnahmen durch einen Abstand (d) getrennt sind, der bei den Fassungen einer gleichen Serie unterschiedlich ist, und andererseits eine Anordnung von Korrekturgläsern (4) mit unterschiedlichen Stärken umfassen, wobei jedes Glas die Form der Aufnahmen (6) der Fassungen aufweist und zentriert ist, das heißt seine Mitte (I) mit der Mitte (O) der Linse, aus der er gebildet ist, zusammenfällt, **dadurch gekennzeichnet, daß** sie für jedes Fassungsmodell mindestens zwei Fassungen (2) umfaßt, deren Wert des Abstands (d) zwischen zwei Aufnahmen (6) 60 bzw. 65 mm beträgt und bei denen jede der Aufnahmen (6) zu ihrer geometrischen Mitte (C) symmetrisch ist, während jedem zentrierten Korrekturglas ein nicht zentriertes Korrekturglas zugeordnet ist, das die gleiche Korrektur liefert, aber dessen Mitte (I) des Glases bzw. (O) der Linse durch einen Abstand (e) mit konstantem Wert bei verschiedenen Gläsern getrennt sind, so daß beim Zusammenbau der Einzelteile der Brille die Differenz zwischen dem Pupillenabstand des Trägers und dem Abstand (d) der Aufnahmen der Haltefassung durch Montage von einem oder zwei nicht zentrierten Gläsern in den Aufnahmen der Fassung kompensiert werden kann, wobei jedes dieser Gläser bei einem Meniskenglas durch Drehung um 180° um die Mitte (C) und bei einem bikonvexen Glas durch Drehung um 180° um die vertikale Achse (10) der Aufnahme (6) seine Mitte (I) entweder links oder rechts von der Mitte (C) der Aufnahme haben kann, um die Mitte (O) seiner Linse der entsprechenden Pupillenmitte anzunähern.

3. Montage von Brillen nach Anspruch 1, **dadurch gekennzeichnet, daß** der Dezentrierungswert der nicht zentrierten Gläser (4) einer gleichen Anordnung von Gläsern 2 mm beträgt.
